# EUROPEAN PATENT SPECIFICATION

(11) **EP 2 949 941 B1**
(45) Date of publication and mention of the grant of the patent: **08.01.2020**
(21) Application number: 15169799.2
(22) Date of filing: 29.05.2015
(51) Int. Cl.: F04D 13/06, F04D 29/02, F04D 29/42, H02K 5/02, F04D 29/58

(54) **MOTOR CASING FOR PUMPS, PARTICULARLY CENTRIFUGAL PUMPS AND PERIPHERAL CENTRIFUGAL PUMPS**
MOTORGEHÄUSE FÜR PUMPEN, INSBESONDERE KREISELPUMPEN UND PERIPHERE KREISELPUMPEN
CARTER DE MOTEUR POUR DES POMPES, PARTICULIÈREMENT DES POMPES CENTRIFUGES ET DES POMPES CENTRIFUGES PÉRIPHÉRIQUES

(30) Priority: 30.05.2014 IT PD20140134
(43) Date of publication of application: 02.12.2015
(73) Proprietor: Dab Pumps S.p.A., 35035 Mestrino (Padova) (IT)
(72) Inventor: SINICO, Francesco, 36075 MONTECCHIO MAGGIORE VI (IT); CAILOTTO, Pietro, 36070 TRISSINO VI (IT)
(74) Representative: Modiano, Micaela Nadia

(56) References cited:
- EP-A1- 1 635 064
- GB-A- 1 434 226
- US-A- 5 009 578
- US-A1- 2004 022 647
- "Pump Handbook", , 1 January 2004 (2004-01-01), XP055156943, Bjerringbro, Denmark Retrieved from the Internet: URL:http://net.grundfos.com/doc/webnet/min ing/_downloads/pump-handbook.pdf [retrieved on 2014-12-05]

## Description

The present invention relates to a motor casing for pumps, particularly centrifugal pumps and peripheral centrifugal pumps.

Currently, centrifugal pumps are known which are composed substantially of a hollow body provided with intake and discharge ducts, containing one or more impellers intercalated by diffusers and keyed on the shaft of an electric motor enclosed within a motor casing that isolates it from the pumping liquid.

These pumps are usually also provided with an electronic device comprising an inverter and operation control and actuation electronics, typically enclosed in a box-like body associated with the outer side of the motor casing.

As is known, in order to ensure correct operation and preservation of the best conditions of use of the pump, said pump must be provided with a motor cooling system, in order to ensure the stability of the temperature by limiting its increase beyond the provided limits.

Temperature control must be provided also for the electronics and the inverter.

Currently, air cooling systems and liquid cooling systems are widespread for keeping the temperature of the motor within the design limits.

In the first case, cooling is due to forced air ventilation by means of a cooling fan installed in the motor casing.

In the second case, the motor casing is struck by at least one fraction of the liquid moved by the hydraulic part, subsequently rising into the discharge duct.

The electronic device also is cooled by an adapted cooling fan or by means of the same liquid that strikes the motor casing with which the device is associated.

Liquid cooling is preferable, in particular, for surface pumps, where the need to reduce the noise of pumping devices by eliminating the external cooling fan, is more strongly felt.

However, this system is not devoid of drawbacks, the first one being the need to make the motor casing of stainless steel, in order to protect it from oxidation caused by the passage of liquid, typically water.

Although metallic materials in general are well suited for conducting heat, stainless steel does not give an optimum result in motor cooling.

Moreover, their use require onerous production methods, such as for example sand casting, and contributes significantly to the weight of the pump.

The provision of motor casings in stainless steel by cold pressing, by drawing sheet metal or by deformation by calendering, is more widespread.

Even these last production methods, however, suffer drawbacks, the first of which is the control of the geometric and dimensional tolerances of the product.

In addition to this there is also the drawback, as in the case of the casting process, of high production costs.

GB 1434226 discloses an axial-flow pump unit having an annular liquid flow passage formed between an outer tubular housing and an inner two-part plastics casing with an electric induction motor designed to run on multi-phase A.C. supplies of 25 volts or less and of frequency greater than 50 Hertz, e.g. 75-400 Hertz. The motor has a cage rotor mounted in two carbon bearings and the casing is coaxially located in the housing by sets of guide vanes which eliminate liquid swirl in flow passage. Current is delivered to the field coils via leads in an insulating member. The hydrofoil shaped blades of the axial-flow impeller of the pump have an angle of 9 5' at the tip and 10 38' at the root. The electric motor and pump impeller are mounted within a sleeve which is supported by resilient material within a main housing member, the arrangement thereby reducing the transmission of vibrations to a central heating system in which the pump unit is operating. Plastics material for the housing, casing or impeller may be glass reinforced polyphenylene oxide.

EP1635064 discloses a pump assembly including an electric motor, a pumping element mounted in a pump chamber, the motor being connected to the pumping element such that activation of the motor causes movement of the pumping element which in turn causes pumping of fluid in the pump chamber, and a motor controller which includes at least one electrical or electronic component and which controls operation of the motor, wherein at least one electrical or electronic component of the motor controller is mounted on or in a wall of the pump chamber.

US20040022647 discloses a centrifugal pump comprising a casing having a motor and an impeller mounted to an end of the motor shaft positioned inside the casing. The motor casing halves are fabricated from a rust resistance material, such as different grades of stainless steel, including 304 SS.

The aim of the present invention is to provide a motor casing for centrifugal pump that is capable of ensuring the right level of cooling of the motor without the cooling fan and can be manufactured with low costs.

Within this aim, an object of the invention is to devise a motor casing that is lighter than known types, ensuring a greater overall lightness for the entire centrifugal pump.

Another object of the invention is to devise a motor casing while ensuring good control of the geometric and dimensional tolerances of the finished product.

In accordance with the invention, there is provided a centrifugal pump with a motor casing as defined in the appended claims.

Further characteristics and advantages of the invention will become better apparent from the description of two preferred but not exclusive embodiments of the motor casing according to the invention, illustrated by way of non-limiting example in the accompanying drawings, wherein:
Figure 1 is a sectional view of the motor casing according to the invention, in a first embodiment thereof, installed in a centrifugal pump;
Figure 2 is a sectional view of the motor casing according to the invention, in a second embodiment thereof, installed in a centrifugal pump shown schematically herein;
Figure 3 is a perspective view of the motor casing according to the invention, again in its second embodiment.

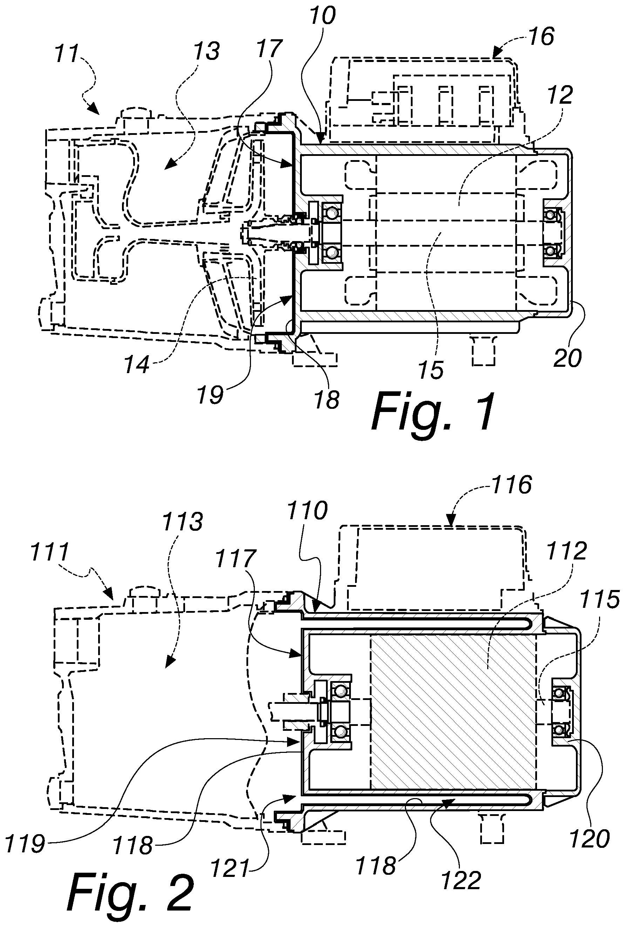

With reference to Figure 1, the motor casing according to the invention, in its first embodiment, is designated generally by the reference numeral 10.

The casing belongs to a centrifugal pump 11, the remaining parts of which are shown in broken lines.

The motor casing 10 contains a motor 12 associated with the hydraulic part 13, provided with an impeller 14, by means of a rotation transmission shaft 15. In the case shown there is a single impeller 14; however, multiple impellers intercalated by diffusers and keyed on the same transmission shaft may be provided.

On the outer side of the motor casing 10 there is an electronic device 16, enclosed in a box-like body, which comprises an inverter and control electronics.

In other cases, the electronic device 16 can be replaced conveniently with an electrical connection.

The motor casing 10 can be provided by die-casting or pressure die-casting aluminum. It is made preferably of pressure die-cast aluminum and has a surface 17, struck by pumping liquid arriving from the hydraulic part 13, that is advantageously provided with an oxidation-resistant coating 18.

The coating 18 preferably can be obtained by deposition of oxidation-resistant materials, for example by Teflon coating, by deposition of ceramic material or by overmolding plastic material. The plastic material consists preferably of an elastomer rubber with high thermal conductivity, which is anchored to the motor casing 10 by hot vulcanization.

In particular, as shown clearly by the accompanying drawings, the surface 17 is arranged at the interface 19 between the hydraulic part 13 and the motor 12, on the hydraulic side and substantially at the head of the motor 12.

The motor casing 10 is also provided with a lid 20 that closes it from the side that is opposite to the hydraulic side 13.

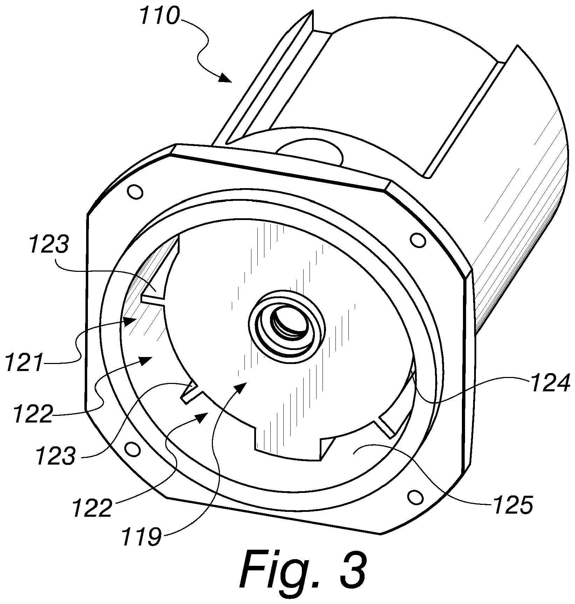

In its second embodiment, the motor casing according to the invention is designated generally by the reference numeral 110 and is shown in Figure 2 and Figure 3. According to the first of these figures, it is installed in a centrifugal pump 111, which is shown schematically herein.

As in the previous embodiment, the motor casing 110 contains a motor 112 associated with the hydraulic part 113, which can be provided with one or more impellers 14, as illustrated and described for the previous embodiment. Association occurs by means of a rotation transmission shaft 115.

On the outer side of the motor casing 110, the centrifugal pump 111 is provided with an electronic device 116, enclosed in a box-like body, which comprises an inverter and control electronics.

In other cases, the electronic device 116 can be replaced conveniently by an electrical connection.

In this embodiment also, the motor casing 110 is closed on the side that lies opposite the hydraulic side with a lid 120.

The motor casing 110 has, in this case, a compartment 121 that is defined around the motor 112 and the surface 117 of which, struck by the pumping liquid, is provided advantageously with an oxidation-resistant coating 118.

Like the previous described embodiment, the motor casing 110 can be provided by die-casting or pressure die-casting aluminum. Preferably, it is made of pressure die-cast aluminum and the coating 118 can be provided by deposition of oxidation-resistant materials, for example Teflon coating, by deposition of ceramic material or by overmolding plastic material. The plastic material is preferably an elastomer rubber with high heat conductivity that is anchored to the motor casing 110 by hot vulcanization.

The compartment 121 is open on the hydraulic side, i.e, on the part for association with the hydraulic part 113, and extends also around the motor 112 substantially with interspaces 122, shown more clearly in Figure 3.

The interspaces 122 are arranged side by side and divided by partitions 123 that extend radially from the inner wall 124 of the motor casing 110, which surrounds the motor 113, to the outer wall 125.

The coating 118 covers the interface 119 between the hydraulic part 113 and the motor 112 and coats the interspaces 122, including the partitions 123.

Operation of the motor casing, according to the invention, is clear from what described and illustrated and in particular it is evident that the pumping liquid is capable of conveying the heat generated by the motor outwardly, through the interface 19 with the hydraulic part 13 or through both the interface 119 and the compartment 121, conveniently provided with partitions 123, which, besides connecting structurally the inner wall 124 to the outer wall 125, create thermal bridges between the two.

The coating 18 or 118 allows to provide motor casings made of aluminum without said aluminum being oxidized by the flow of water.

It should be noted also that the use of aluminum to provide the motor casing 10 and 110 allows first of all to improve outwardly heat conduction with respect to stainless steel, due to the greater heat conductivity of said material, and also to reduce the overall weight of the pump 11 or 111.

In both of the embodiments, the heat generated both by the motor 12 or 112 and by the electronic device 16 or 116 is dissipated easily by the motor casing 11 or 111, not only by way of the flow of the liquid but also by using aluminum and optionally the coating 18 or 118, if it is made of rubber with high heat conductivity.

Moreover, the pressure die-casting process allows to provide the motor casing with low costs and also to perform finishing operations to obtain better dimensional and geometric tolerances than those that can be obtained with the most widespread metal plate drawing and calendering processes.

In practice it has been found that the invention achieves the intended aim and objects, by providing a motor casing capable of improving transmission of the heat generated by the motor toward the outside of the centrifugal pump, with reduced production costs.

The invention thus conceived is susceptible of numerous modifications and variations, all of which are within the scope of the appended claims; all the details may further be replaced with other technically equivalent elements.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A centrifugal pump (11, 111) comprising a motor casing (10, 110) containing a motor (12, 112) associated with a hydraulic part (13, 113), provided with at least one impeller (14), by means of a rotation transmission shaft (15, 115), and said motor casing (10, 110) being provided with at least one surface (17, 117) that is struck by pumping liquid that arrives from said hydraulic part (13, 113), the pump being **characterized in that** said motor casing (10, 110) is made of aluminum, and said surface (17, 117) struck by pumping liquid is provided by deposition of an oxidation-resistant coating (18, 118), said surface (17, 117) provided by deposition of said oxidation-resistant coating (18,118) being arranged, on the hydraulic side, at the interface (19, 119) between said hydraulic part (13, 113) and said motor (12, 112), said coating (18, 118) being provided by:
a Polytetrafluoroethylene (PTFE) coating;
deposition of ceramic material; or
overmolding plastic material.

2. The centrifugal pump according to claim 1, **characterized in that** said motor casing (10, 110) is made of pressure die-cast aluminum.

3. The centrifugal pump according to claim 1, **characterized in that** said surface (117) further belongs to at least one compartment (121) defined around said motor (112).

4. The centrifugal pump according to claim 3, **characterized in that** said compartment (121) is defined around said motor (112) with interspaces (122) arranged side by side and divided by partitions (123) that extend radially from an inner wall (124) of said motor casing (110), which surrounds said motor (113), to an outer wall (125).

5. The centrifugal pump according to claim 1, **characterized in that** said plastic material consists of an elastomer rubber.

## Patentansprüche

1. Eine Kreiselpumpe (11, 111), die ein Motorgehäuse (10, 110) umfasst, welches einen Motor (12, 112) enthält, der über eine Rotationstransmissionswelle (15, 115) mit einem Hydraulikteil (13, 113) verbunden ist, das mit mindestens einem Flügelrad (14) ausgestattet ist; wobei das Motorgehäuse (10, 110) mit mindestens einer Oberfläche (17, 117) versehen ist, auf die Pumpenflüssigkeit auftrifft, welche von dem Hydraulikteil (13, 113) kommt; wobei die Pumpe **dadurch gekennzeichnet ist, dass** das Motorgehäuse (10, 110) aus Aluminium besteht und die Oberfläche (17, 117), auf welche Pumpenflüssigkeit auftrifft, durch Abscheidung einer oxidationsbeständigen Beschichtung (18, 118) hergestellt wird; wobei die durch Abscheidung der oxidationsbeständigen Beschichtung (18, 118) hergestellte Oberfläche (17, 117) auf der Hydraulikseite an der Grenzfläche (19, 119) zwischen dem Hydraulikteil (13, 113) und dem Motor (12, 112) angeordnet ist; wobei die Beschichtung (18, 118) bereitgestellt wird durch:
eine Polytetrafluorethylen-, PTFE-, Beschichtung;
das Abscheiden von Keramikmaterial oder
das Überspritzen von Kunststoffmaterial.

2. Die Kreiselpumpe gemäß Anspruch 1, **dadurch gekennzeichnet, dass** das Motorgehäuse (10, 110) aus druckgegossenem Aluminium besteht.

3. Die Kreiselpumpe gemäß Anspruch 1, **dadurch gekennzeichnet, dass** die Oberfläche (117) außerdem zu mindestens einem Raum (121) gehört, der um den Motor (112) herum bestimmt ist.

4. Die Kreiselpumpe gemäß Anspruch 3, **dadurch gekennzeichnet, dass** der Raum (121) um den Motor (112) herum bestimmt ist, mit Zwischenräumen (122), die nebeneinander angeordnet und durch Trennwände (123) getrennt sind, welche sich radial von einer Innenwand (124) des Motorgehäuses (110), das den Motor (113) umgibt, zu einer Außenwand (125) erstrecken.

5. Die Kreiselpumpe gemäß Anspruch 1, **dadurch gekennzeichnet, dass** das Kunststoffmaterial aus einem Elastomergummi besteht.

## Revendications

1. Pompe centrifuge (11, 111) comportant un carter de moteur (10, 110) contenant un moteur (12, 112) associé à une partie hydraulique (13, 113), pourvue d'au moins une roue (14), au moyen d'un arbre de transmission par rotation (15, 115), et ledit carter de moteur (10, 110) étant pourvu d'au moins une surface (17, 117) qui est frappée par du liquide de pompage qui arrive de ladite partie hydraulique (13, 113), la pompe étant **caractérisée en ce que** ledit carter de moteur (10, 110) est constitué d'aluminium, et ladite surface (17, 117) frappée par du liquide de pompage est fournie par dépôt d'un revêtement résistant à l'oxydation (18, 118), ladite surface (17, 117) fournie par dépôt dudit revêtement résistant à l'oxydation (18, 118) étant agencée, du côté hydraulique, à l'interface (19, 119) entre ladite partie hydraulique (13, 113) et ledit moteur (12, 112), ledit revêtement (18, 118) étant fourni par :
un revêtement de polytétrafluoroéthylène (PTFE) ;
dépôt d'une céramique ; ou
surmoulage d'une matière plastique.

2. Pompe centrifuge selon la revendication 1, **caractérisée en ce que** ledit carter de moteur (10, 110) est constitué d'aluminium moulé sous pression.

3. Pompe centrifuge selon la revendication 1, **caractérisée en ce que** ladite surface (117) appartient en outre à au moins un compartiment (121) défini autour dudit moteur (112).

4. Pompe centrifuge selon la revendication 3, **caractérisée en ce que** ledit compartiment (121) est défini autour dudit moteur (112) avec des espacements (122) agencés côte à côte et divisés par des séparations (123) qui s'étendent radialement depuis une paroi intérieure (124) dudit carter de moteur (110), qui entoure ledit moteur (113), jusqu'à une paroi extérieure (125).

5. Pompe centrifuge selon la revendication 1, **caractérisée en ce que** ladite matière plastique consiste en un caoutchouc élastomère.
